(19) Europäisches Patentamt
European Patent Office
Office européen des brevets

(11) **EP 2 377 259 B1**

(12) **FASCICULE DE BREVET EUROPEEN**

(45) Date de publication et mention
de la délivrance du brevet:
**16.09.2015 Bulletin 2015/38**

(21) Numéro de dépôt: **09806102.1**

(22) Date de dépôt: **23.12.2009**

(51) Int Cl.:
*H04L 1/06* ^(2006.01)   *H04B 7/02* ^(2006.01)
*H04B 7/06* ^(2006.01)   *H04L 5/00* ^(2006.01)
*H04L 1/00* ^(2006.01)   *H04L 27/26* ^(2006.01)
*H04L 25/02* ^(2006.01)   *H04L 25/03* ^(2006.01)

(86) Numéro de dépôt international:
**PCT/FR2009/052674**

(87) Numéro de publication internationale:
**WO 2010/072979 (01.07.2010 Gazette 2010/26)**

(54) **PROCEDE DE TRANSMISSION D'UN SIGNAL DE DONNEES CODÉ ESPACE-FRÉQUENCE VIA UNE PLURALITE D'ENTITES D'EMISSION**

VERFAHREN ZUR ÜBERTRAGUNG EINES RAUM-FREQUENZ KODIERTEN DATENSIGNALS ÜBER MEHRERE ÜBERTRAGUNGSFUNKTIONSEINHEITEN

METHOD FOR TRANSMITTING A SPACE-FREQUENCY CODED DATA SIGNAL VIA A PLURALITY OF TRANSMITTING ENTITIES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0859031**

(43) Date de publication de la demande:
**19.10.2011 Bulletin 2011/42**

(73) Titulaire: **Orange**
**75015 Paris (FR)**

(72) Inventeurs:
• **CLESSIENNE, Thierry**
**F-92130 Issy Les Moulineaux (FR)**
• **OSMANE, Ali**
**F-75014 Paris (FR)**

(74) Mandataire: **Jeune, Pascale**
**Orange**
**FT/OLNC/OLPS/IPL/PAT**
**38-40, rue du Général Leclerc**
**92794 Issy-Les-Moulineaux Cedex 9 (FR)**

(56) Documents cités:
**EP-A- 1 628 425       US-A1- 2005 265 280
US-A1- 2008 260 053**

**Description**

Le domaine de l'invention est celui des télécommunications. Plus particulièrement, l'invention concerne la transmission d'un signal de données à destination d'au moins un récepteur à partir d'une pluralité d'entités d'émission.

Un signal transmis par une entité d'émission subit des déformations en fonction des conditions de propagation, et notamment la puissance du signal reçu par un récepteur varie dans le temps et dans l'espace. Une entité d'émission est par exemple, dans le cas d'un réseau de télécommunications radio, un émetteur radio comportant une antenne d'émission, ou une station de base radio, ou bien encore une station relais radio fixe ou mobile comportant un dispositif de transmission d'un signal en provenance d'une station de base radio. Une entité d'émission peut également être un émetteur de signaux par voie acoustique dans un milieu sous marin, ou bien encore un émetteur pour un réseau de télécommunication fixe par exemple en fibre optique ou cuivre.

Afin d'améliorer la qualité du signal reçu par un récepteur, des répliques du signal peuvent être également émises à destination du récepteur. Une diversité temporelle est ainsi obtenue par émission du signal et des répliques avec un décalage temporel, une diversité spatiale par émission du signal et des répliques par des antennes distinctes et une diversité fréquentielle par émission du signal et répliques sur des fréquences différentes.

Les propriétés de diversités spatiale et temporelle sont ainsi exploitées pour des réseaux de télécommunications MISO ("pour "Multiple Input Single Output" en anglais) dans lesquels les différentes répliques du signal sont émises par des entités d'émission co-localisées.

Les répliques du signal sont générées par application d'un code spatio-temporel sur le signal temporel à transmettre constitué d'une succession de symboles. Le code spatio-temporel est sélectionné en fonction des propriétés d'orthogonalité temporelle entre le signal et les répliques obtenues après codage spatio-temporel. La sélection du code dépend en particulier du nombre d'entités d'émission. Dans le cas de deux entités d'émission co-localisées, il est courant d'utiliser un code d'Alamouti tel que décrit dans le document intitulé "A simple transmit diversity technique for wireless communications" dont l'auteur est SM Alamouti et publié dans la revue "IEEE Journal on Select Areas in Communications", vol 16, en 1998. La réplique du signal obtenue après application du code d'Alamouti est constituée d'une succession de symboles orthogonale à la succession de symboles avant codage.

L'utilisation de tels codes spatio-temporels permet ainsi d'exploiter les diversités spatiale et temporelle obtenues par l'émission co-localisée du signal et d'une ou plusieurs répliques orthogonales du signal, le signal et les répliques subissant des déformations similaires entre les différentes entités d'émission et le récepteur, et notamment subissant une atténuation identique de leur puissance et subissent un même temps de propagation.

Cependant, pour des réseaux de télécommunication MISO distribué dans lesquelles les différentes répliques sont émises par différentes entités d'émission distantes géographiquement, les propriétés d'orthogonalités temporelles entre les signaux et répliques ne sont plus respectées au niveau du récepteur. En effet, les conditions de propagation entre chaque entité d'émission et le récepteur sont différentes les unes des autres, et notamment les temps de propagation subis par le signal et les répliques. Le signal et les répliques subissent ainsi des décalages temporels différents dont une compensation à l'émission peut s'avérer impossible, et les propriétés d'orthogonalité entre le signal et les répliques ne sont plus respectées au niveau du récepteur. Il n'est alors plus possible d'effectuer un décodage spatio-temporel dans le récepteur.

La demande américaine de brevet US2005265280 divulgue un système de communication OFDM espace temps coopératif avec une diversité spatiale au niveau cellule ou secteur d'une station de base. Chaque station de base (ou secteur) transmet sur deux sous porteuses un couple de symboles original ou le couple orthogonal généré par un codage de type Alamouti. Entre les différentes stations de base ou les différents secteurs, les couples de symboles originaux ou orthogonaux sont permutés périodiquement, de manière cirulaire.

J Le document intitulé "System Performance of Distributed Transmit Diversity of OFDL-based 1xEV-DO Broadcast Network", dont les auteurs sont Young C. Yoon, Alpaslan Savas, et Wanshi Chen, publié dans les actes de la conférence "Wireless Communications and Networking Conférence", IEEE-WCNC 2006, vol 3, pages 1475-1479, applique le principe d'orthogonalité du codage d'Alamouti dans le domaine fréquentiel dans un réseau de type MISO distribué. Un signal OFDM (pour "Orthogonal Frequency Division Multiplexing" en anglais) et une réplique du signal orthogonale en fréquence, générée à partir d'un codage d'Alamouti appliqué sur la succession de symboles à transmettre, sont ainsi émis par deux entités d'émission distantes géographiquement à destination d'un récepteur. Tout décalage temporel se traduisant dans le domaine fréquentiel par un déphasage, un décalage temporel entre un signal et sa réplique n'affecte alors plus le décodage d'Alamouti mis en oeuvre dans le récepteur, grâce aux traitements fréquentiels opérés pour la constitution des signaux OFDM à l'émission et démodulation ODFM à la réception. Cependant, cette mise en oeuvre n'est possible que pour un réseau MISO distribué avec transmission d'un signal et d'une seule réplique à partir respectivement de deux entités d'émission distantes géographiquement à destination d'un récepteur. Cette restriction ne permet pas le déploiement de réseaux de télécommunication MISO distribués avec transmission d'un signal par une pluralité d'entités d'émission, par exemple dans le cas de réseaux de télécommunication dits collaboratifs.

Il existe donc un besoin pour un procédé d'émission d'un signal de données à destination d'au moins un récepteur à partir d'une pluralité d'entités d'émission, que ces entités d'émission soient indifféremment co-localisées et/ou situées en des points géographiquement distincts.

Pour atteindre cet objectif, l'invention propose le procédé défini dans la revendication indépendante 1.

Dans un exemple particulier de réalisation un procédé de transmission d'un signal de données comportant une suite de symboles à destination d'un récepteur est divulgué, le procédé comportant la génération d'une pluralité de signaux OFDM émis respectivement par une pluralité d'entités d'émission. Le procédé comporte les étapes de :

- génération d'une pluralité d'une succession de couples de symboles à partir de la suite de symboles, comportant les sous-étapes de:

  - génération d'au moins un couple de symboles orthogonal à un couple courant de symboles de ladite succession de couples de symboles,
  - génération d'au moins une réplique par duplication du couple courant de symboles,
  - allocation dudit couple courant de symboles, dudit au moins un couple de symboles orthogonal et de ladite au moins une réplique aux entités d'émission de la pluralité d'entités d'émission,

  les sous-étapes étant réitérées pour tous les couples de symboles de la succession de couples de symboles,
- génération de la pluralité de signaux OFDM à partir de la pluralité d'une succession de couples de symboles, les signaux OFDM comportant un nombre de sous-porteuses égal au double du nombre d'entités d'émission.

Ainsi, un gain en diversité spatiale et un gain en diversité temporelle sont obtenus par une combinaison de propriétés d'orthogonalité et de colinéarité de signaux émis par une pluralité d'entités d'émission indifféremment co-localisées ou situées en des points géographiquement distincts. L'allocation itérative des couples de symboles à transmettre, orthogonaux ou dupliqués permet de plus de répartir les effets néfastes que peut induire un canal de propagation particulier entre une entité d'émission et le récepteur. D'autre part, le récepteur est apte à recevoir des signaux émis par des entités géographiquement distantes ce qui permet la mise en place de réseaux de télécommunications combinant des entités d'émission co-localisées et des entités d'émission distantes géographiquement.

Le au moins un couple de symboles orthogonal est généré par un codage spatio-temporel appliqué au couple courant de symboles.

Cette mise en oeuvre permet d'assurer la propriété d'orthogonalité par simple application de mots de code sur les couples de symboles.

Dans un exemple particulier de réalisation l'allocation du couple de symboles à transmettre, du au moins un couple de symboles orthogonal et du au moins un couple de symboles dupliqué à la pluralité d'entités d'émission est cyclique.

L'allocation cyclique des couples de symboles à transmettre, orthogonaux ou dupliqués permet de moyenner les effets néfastes que peut induire un canal de propagation particulier entre une entité d'émission et le récepteur. L'allocation cyclique ne nécessite aucune information de qualité des canaux de propagation. Aucune consommation de ressources spectrales supplémentaires n'est nécessaire pour l'émission de ce type d'information par le récepteur. Cette allocation est par exemple appropriée pour de la diffusion de données.

Dans un exemple particulier de réalisation l'étape de génération d'une pluralité d'une succession de couples comporte en outre les sous-étapes de :

- collecte d'un ensemble d'indices de qualité de canaux de propagation entre les entités d'émission et le récepteur,
- sélection de l'allocation du couple courant de symboles, du au moins un couple de symboles orthogonal et du au moins un couple de symboles dupliqué à la pluralité d'entités d'émission selon ledit ensemble d'indices de qualité.

La collecte des indices de qualité des différents canaux de propagation permet ainsi de renforcer la composante orthogonale ou colinéaire c'est-à-dire de privilégier le gain en diversité temporelle ou diversité spatiale et ainsi de maximiser le gain global en diversité obtenu.

L'invention concerne également les dispositifs définis dans les revendications 3 et 4.

Selon un premier exemple de réalisation, un dispositif destiné à une entité d'émission génère et émet un signal OFDM à partir de la suite de symboles à transmettre via une pluralité d'entités d'émission.

Selon un deuxième exemple de réalisation, les étapes du procédé sont mises en oeuvre par une entité de gestion et les entités d'émission sont connectées à l'entité de gestion. Un dispositif destiné à une entité de gestion génère et alloue cycliquement des couples de symboles à transmettre, orthogonaux et dupliqués aux entités d'émission. Une entité d'émission est apte à émettre un signal OFDM à partir d'une succession de symboles reçus.

Selon un troisième exemple de réalisation, les étapes du procédé sont mises en oeuvre par une entité de gestion et les entités d'émission sont connectées à l'entité de gestion. Un dispositif destiné à une entité de gestion génère et alloue sélectivement des couples de symboles à transmettre, orthogonaux et dupliqués aux entités d'émission. Une entité de d'émission est apte à émettre un signal OFDM à partir d'une succession de symboles reçus.

Selon un quatrième exemple de réalisation, un dispositif destiné à une entité de gestion notifie une allocation sélective de couples de symboles à transmettre, orthogonaux et dupliqués, la sélection étant déterminée à partir d'une collecte d'indices de qualité de canaux de propagation entre les entités d'émission et le récepteur. Un dispositif destiné à une entité d'émission, suite à la réception d'une notification de la sélection, génère une succession de couples à transmettre, dupliqués et orthogonaux et émet un signal OFDM.

Les dispositifs selon l'invention présentent des avantages similaires à ceux du procédé exposés précédemment.

L'invention concerne également l'entité de gestion définie dans la revendication 3.

L'invention concerne également le système défini dans la revendication 4 comportant une entité de gestion comme définie dans la revendication 3 ainsi qu'un pluralité d'entités d'émission telles que décrites précédement.

L'invention concerne également un programme d'ordinateur pour une entité de gestion comprenant des instructions logicielles pour commander la mise en oeuvre de celles des étapes du procédé défini dans la revendication indépendante 1 qui sont mises en oeuvre par une entité de gestion lorsque le programme est exécuté par l'entité de gestion.

D'autres caractéristiques et avantages de la présente invention apparaîtront plus clairement à la lecture de la description suivante de plusieurs modes particuliers de réalisation du procédé.

- La figure 1 représente un exemple d'architecture de réseau de télécommunication MISO distribué,
- la figure 2 représente les étapes du procédé de transmission d'un signal par des entités d'émission à destination d'un récepteur selon l'invention,
- la figure 3 représente des sous-étapes d'allocation de couples de symboles aux entités d'émission selon un mode particulier de réalisation,
- la figure 4 représente les étapes d'un exemple de procédé de réception d'un signal transmis par des entités d'émission selon l'invention,
- la figure 5 représente une vue schématique d'un dispositif de transmission d'un signal OFDM d'une entité d'émission selon un premier mode de réalisation, le signal OFDM étant déterminé à partir d'une suite de symboles à transmettre par plusieurs entités d'émission à destination d'un récepteur.
- la figure 6 représente une vue schématique d'un dispositif d'une entité de gestion de génération d'une pluralité d'une succession de couples de symboles et d'un dispositif de transmission d'un signal OFDM d'une entité d'émission connectée à l'entité de gestion selon un deuxième mode de réalisation.
- la figure 7 représente une vue schématique d'un dispositif d'une entité de gestion de génération d'une pluralité d'une succession de couples de symboles et d'un dispositif de transmission d'un signal OFDM d'une entité d'émission connectée à l'entité de gestion selon un troisième mode de réalisation,
- la figure 8 représente une vue schématique d'un dispositif d'une entité de gestion de sélection d'une allocation de couples de symboles et d'un dispositif de transmission d'un signal OFDM d'une entité d'émission connectée à l'entité de gestion selon un quatrième mode de réalisation.

Afin de clarifier les définitions, les paragraphes suivants sont un rappel du principe de transmission d'un signal et de répliques orthogonales par des entités d'émission co-localisées d'un réseau de télécommunication MISO.

Les répliques orthogonales sont générées par application d'un code spatio-temporel sur la suite de symboles à transmettre. De tels codes permettent d'exploiter les diversités spatiale et temporelle obtenues par l'émission d'un signal et de répliques orthogonales.

Dans le cas de deux entités d'émission co-localisées, il est usuel d'utiliser le code d'Alamouti. Une suite de symboles $S_{ortho}$ est ainsi générée à partir de la suite de symboles à transmettre $S= \{s_0, s_1, s_2, s_3, ... s_{2k}, s_{2k+1}, ...\}$ tel que

$$S_{ortho} = \{-s_1^*, s_0^*, -s_3^*, s_2^* ... -s_{2k+1}^*, s_{2k}^*, ...\},$$

l'opérateur * désignant le complexe conjugué.

De façon équivalente, la suite de symboles $S_{ortho}$ est générée par application d'un mot de code matriciel $C_{Alamouti}$ sur des couples successifs de la suite S de symboles à transmettre:

$$C_{Alamouti}= \begin{pmatrix} s_0 & s_1 \\ -s_1{}^* & s_0{}^* \end{pmatrix}$$

Une première succession de couples de symboles est obtenue par lecture de la première ligne du mot de code matriciel et est émise par une première entité d'émission. La suite de symboles correspondante est identique à la suite S de symboles à transmettre.

Une deuxième succession de couples de symboles est obtenue par lecture de la deuxième ligne du mot de code matriciel et est émise par une deuxième entité d'émission. La suite de symboles correspondante est la suite de symboles $S_{ortho}$, orthogonale à la suite S de symboles à transmettre.

La propriété d'orthogonalité entre le signal émis et sa réplique s'exprime par la propriété du mot de code qui est tel que :

$$C_{Alamouti}C_{Atlamouti}{}^\dagger= \begin{pmatrix} \| s_0 \|^2 + \| s_1 \|^2 \end{pmatrix} \ Id_2$$

l'opérateur $\dagger$ désignant le transposé conjugué, et la matrice $Id_2$ étant la matrice identité de taille (2,2).

Le code d'Alamouti permet de rendre orthogonal un canal de propagation $H_1$ entre la première entité d'émission et le récepteur et un canal de propagation $H_2$ entre la deuxième entité d'émission et le récepteur selon l'axe des temps et selon l'axe de l'espace.

Le récepteur restitue une estimation $S_{estim}$ de la suite de symboles qui a été émise par un décodage d'Alamouti au sens du maximum de vraisemblance appliqué sur une suite de symboles reçus $S_{recu}$, résultant de l'émission des suites de symboles S et $S_{ortho}$ respectivement à partir de la première et deuxième entité d'émission. Le décodage est ainsi mis en oeuvre par estimation des canaux de propagation $H_1$ et $H_2$ et estimation successive des couples de symboles qui ont été transmis par résolution du système :

$$S_{estim}= H_{equi}{}^\dagger \times S_{reçu}$$

avec

$$H_{equi}= \begin{pmatrix} H_1 & -H_2 \\ H_2{}^* & H_1{}^* \end{pmatrix}$$

système se mettant sous la forme équivalente suivante du fait de la propriété d'orthogonalité du code:

$$\begin{pmatrix} Sestim_0 \\ Sestim_1{}^* \end{pmatrix} = \begin{pmatrix} \|H_1\|^2 + \|H_2\|^2 & 0 \\ 0 & \|H_1\|^2 + \|H_2\|^2 \end{pmatrix} \times \begin{pmatrix} s_0 \\ s_1{}^* \end{pmatrix} + N$$

où N est un vecteur de composantes de bruit reçu.

Dans le cas d'entités d'émission géographiquement distantes, la propriété d'orthogonalité est conservée dans le cas particulier de deux entités d'émission et pour des signaux OFDM ainsi que présenté dans l'article précité dont les auteurs sont Young C. Yoon, Alpaslan, et Wanshi et le principe de réception est similaire.

On s'intéresse maintenant au cas d'un nombre NE d'entités d'émission indifféremment co-localisées ou distantes les unes des autres géographiquement.

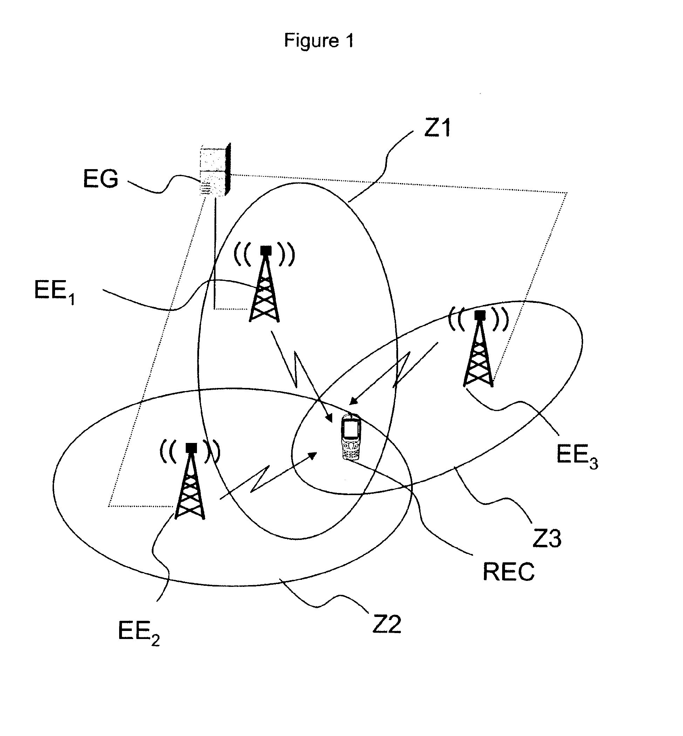

La **figure 1** représente un exemple d'architecture d'un réseau de télécommunication MISO distribué pour la transmission d'un signal de données à partir d'entités d'émission $EE_1$, $EE_2$, $EE_3$ à destination d'un récepteur REC.

A titre d'exemple illustratif, les entités d'émission sont des stations de base radio ou bien encore des stations relais radio fixes ou mobiles. Les entités d'émission sont connectées à une entité de gestion EG d'un réseau de télécommunication non représenté. Le réseau de télécommunication est par exemple un réseau de télécommunication radio mobile UMTS (pour "Universal Mobile Télécommunication System" en anglais) de générations ultérieures à la troisième génération tel le LTE (pour " Long term Evolution" en anglais) ou bien encore un réseau local radio tel le WIMAX (pour "Worldwide Interoperability for Microwave Access" en anglais). Il peut s'agir également d'un réseau de télécommunication radio mobile de type réseau collaboratif.

Le récepteur est par exemple un terminal mobile ou tout équipement équipé d'un module de communication apte à recevoir des signaux radios en provenance des entités d'émission.

Les entités d'émission sont dans cet exemple situées en des points géographiquement distincts et permettent chacune de couvrir une zone de couverture radio respective Z1, Z2 et Z3.

Cette architecture est transposable dans le domaine des réseaux de télécommunications sous-marines, les zones de couvertures étant alors définies en fonction des portées des ondes acoustiques sous-marines. De même les zones de couvertures sont délimitées par le câblage des différentes entités d'émission dans le cas de réseaux fixes.

Dans une telle architecture, un signal de données comportant une suite de symboles est transmis à destination du récepteur REC par les différentes entités afin d'améliorer la qualité du signal reçu.

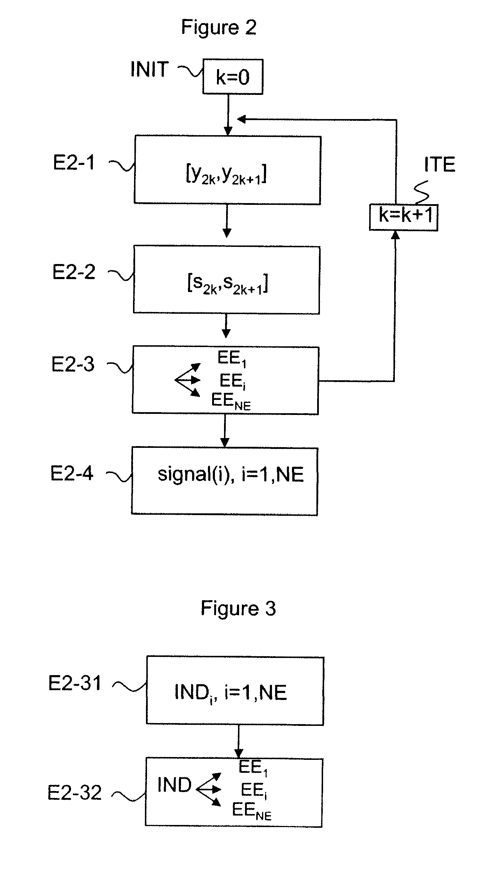

La **figure 2** représente les étapes du procédé de transmission d'un signal de données comportant une suite de symboles par des entités d'émission indifféremment co-localisées et/ou distantes géographiquement les unes des autres. Les étapes du procédé sont décrites pour la transmission d'un signal de données par NE entités d'émission $EE_i$, i variant de 1 à NE et NE supérieur à 1. Par souci de clarté les étapes sont exposées plus précisément pour le cas particulier de trois entités d'émission $EE_i$, $EE_2$, $EE_3$.

Le signal de données comporte une suite S de N symboles $s_n$, l'indice n variant de 0 à N-1. Les symboles sont par exemples des symboles modulés tels des symboles PSK (pour "Phase shift keying" en anglais), ou encore QAM (pour "Quadrature Amplitude Modulation" en anglais). Les symboles de la suite S sont considérés par couples de symboles successifs tels qu'un $k^{ième}$ couple correspond aux symboles successifs $s_{2k}$, $s_{2k+1}$.

Le procédé comprend des étapes E2-1 à E2-3 itératives sur la succession de couples de symboles. Les itérations sont symbolisées par une étape d'initialisation INIT d'un indice k sur les symboles à transmettre et une étape ITE d'incrémentation de l'indice k.

En une étape E2-1, au moins un couple de symboles $[y_{2k}, y_{2k+1}]$ orthogonal au couple courant de symboles $[s_{2k}, s_{2k+1}]$ est généré. Un couple de symboles orthogonal est par exemple obtenu par application d'un code spatio-temporel tel un code d'Alamouti.

Les différentes étapes sont illustrées par la suite par application d'un code d'Alamouti, mais sont transposables à tout code permettant la génération d'un couple de symboles orthogonal au couple courant de symboles. Un couple de symboles orthogonal généré à partir du code d'Alamouti tel que décrit précédemment est donné par :

$$[y_{2k}, y_{2k+1}]= [-s^*_{2k+1}, s^*_{2k}]$$

l'opérateur * désignant le complexe conjugué.

Le nombre de couples de symboles orthogonaux est égal à $N_{ortho}$.

En une étape E2-2, au moins un couple de symboles dupliqué, dit réplique, est généré à partir du couple courant de symboles $[s_{2k}, s_{2k+1}]$.

Le nombre de couples de symboles dupliqués générés est égal à $N_{duplic}$.

Le nombre total de couples de symboles générés lors des étapes E2-1 et E2-2 est tel que :

$$N_{ortho}+N_{duplic}+1=NE,$$

les nombres $N_{ortho}$ et $N_{duplic}$ étant configurables.

Ainsi, dans le cas de trois entités d'émission un couple de symboles dupliqués $[s_{2k}, s_{2k+1}]$ est par exemple généré.

En une étape E2-3, les couples de symboles orthogonaux et les couples de symboles dupliqués générés respectivement lors des étapes E1-2 et E2-2 ainsi que le couple courant de symboles sont alloués aux différentes entités d'émission.Dans un mode de réalisation particulier, l'allocation du couple courant de symboles, des couples de symboles orthogonaux et des couples de symboles dupliqués est effectuée cycliquement sur les différentes entités d'émission.

Ainsi dans le cas de trois entités d'émission, le couple de symboles orthogonal au couple courant de symboles est par exemple alloué à l'entité d'émission $EE_1$ si les deux couples orthogonaux générés lors des deux itérations précédentes ont été alloués respectivement aux entités d'émission $EE_2$ puis $EE_3$.

Ainsi, à la $k^{\text{ième}}$ itération, la succession $SC\_EE_1(k)$ de couples alloués itérativement à l'entité $EE_1$ est donnée par :

$$SC\_EE_1(k)= \{[y_0,y_1], [s_2,s_3], [s_4,s_5], [y_6,y_7], ...[s_{2k-4}, s_{2k-3}] [s_{2k-2}, s_{2K-1}], [y_{2k}, y_{2k+1}]\}$$

et les successions de couples $SC\_EE_2(k)$ et $SC\_EE_3(k)$ alloués aux entités $EE_2$ et $EE_3$ sont respectivement :

$$SC\_EE_2(k)=\{[s_0,s_1], [y_2,y_3], [s_4,s_5], [s_6,s_7], ... [y_{2K-4}, y_{2K-3}] [s_{2k-2}, s_{2K-1}], [s_{2k}, s_{2k+1}],$$

$$SC\_EE_3(k)= \{[s_0,s_1], [s_2,s_3], [y_4,y_5], [s_6,s_7], ... [s_{2k-4}, y_{2K-3}], [y_{2k-2}, y_{2k-1}], [s_{2k}, s_{2K+1}]\}.$$

Un cycle d'allocation correspond, dans cet exemple particulier, à l'allocation de 3 couples orthogonaux successifs itérativement aux 3 entités d'émission. De façon générale le cycle d'allocation est configurable.

En variante, l'allocation des couples de symboles effectuée lors de l'étape E2-3 est sélective. Dans ce cas, l'étape E2-3 comporte des sous étapes E2-31 et E2-32 représentées dans la **figure 3.**

Lors de la sous-étape E2-31 l'allocation est effectuée à partir d'une collecte d'un ensemble d'indices de qualité $IND_i$, i variant de 1 à NE, des canaux de propagation entre chaque entité d'émission $EE_i$ et le récepteur.

Cette collecte est par exemple mise en oeuvre par réception d'indices de qualité des canaux de propagation émis par le récepteur. Ces indices sont par exemple des mesures de puissance, ou bien encore des estimations d'atténuation de signaux reçus. Ces mesures ou estimations sont par exemple effectuées par le récepteur à partir de signaux reçus ou de signaux pilotes ayant été émis par les différentes entités d'émission.

Lors de la sous-étape E2-32, l'allocation des couples de symboles orthogonaux au couple courant de symboles est réalisée en fonction des valeurs de l'ensemble des indices de qualité collecté.

Dans un mode de réalisation particulier, un couple de symboles orthogonal au couple courant de symboles est alloué à un ensemble d'entités d'émission dont les valeurs des indices de qualité correspondantes de l'ensemble des indices de qualité collecté sont maximum. Cette allocation permet de renforcer la transmission d'un couple de symboles orthogonal et ainsi de privilégier un gain en diversité spatiale.

En variante, un couple de symboles orthogonal au couple courant de symboles est alloué à un ensemble d'entités d'émission dont les valeurs des indices de qualité correspondantes de l'ensemble des indices de qualité collecté sont minimum. Cette allocation permet de renforcer la transmission du couple courant et d'un couple de symboles dupliqué et ainsi de privilégier un gain en diversité temporelle.

En variante, l'allocation des couples de symboles orthogonaux est réalisée en fonction d'un critère de sélection satisfaisant un compromis entre l'exploitation de la diversité spatiale et l'exploitation de la diversité temporelle. A titre d'exemple illustratif non limitatif, deux ensembles d'entités d'émission sont définis correspondant à l'allocation d'un couple orthogonal aux entités d'émission du premier ensemble et un couple dupliqué aux entités d'émission du deuxième ensemble, de tel sorte que la moyenne des indices de qualité correspondant au premier ensemble soit comparable à la moyenne des indices de qualité correspondant au deuxième ensemble. Ce critère de sélection permet d'égaliser les qualités de réception totales sur les composantes orthogonales et colinéaires.

Dans le cas de trois entités d'émission $EE_1$, $EE_2$, $EE_3$, trois successions de symboles $SCS\_EE_1(k)$, $SCS\_EE_2(k)$ et $SCS\_EE_3(k)$ sont ainsi générées.

Lors d'une étape E2-4, NE signaux OFDM, signal(i) pour i variant de 1 à NE, comportant un nombre $N_f$ de sous-porteuses, sont générés à partir des NE successions de symboles alloués itérativement aux NE entités d'émission lors des étapes E2-1 à E2-3. A cet effet, des émetteurs OFDM, bien connus de l'homme du métier, sont mis en oeuvre dans les NE entités d'émission.

Le nombre de sous-porteuses $N_f$ d'un signal OFDM émis par l'entité d'émission $EE_i$ est égal au double du nombre NE d'entités d'émission. Ainsi dans le cas de trois entités d'émission les trois signaux OFDM signal(i) comportent chacun six sous-porteuses.

Le récepteur reçoit alors NE signaux OFDM en provenance de NE entités d'émission indifféremment co-localisées ou distantes géographiquement et met en oeuvre un démodulateur OFDM puis effectue un décodage d'Alamouti selon le principe évoqué précédemment pour un système MISO avec des entités d'émission co-localisées.

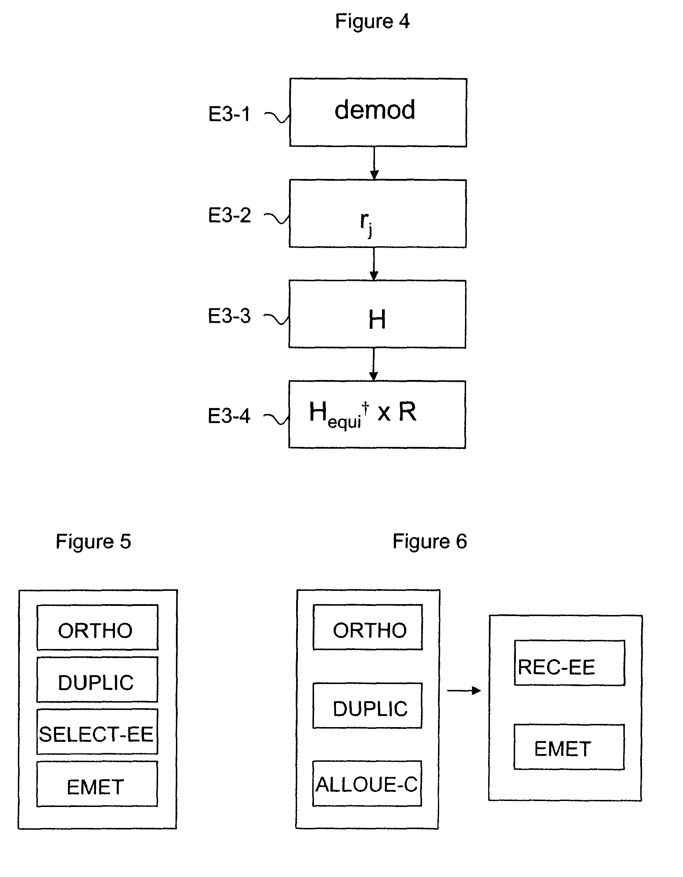

En référence à la **figure 4,** un exemple de procédé de réception des NE signaux OFDM est décrit. Par souci de clarté, les étapes du procédé sont précisées dans le cas particulier de trois entités d'émission et une allocation cyclique du couple courant, d'un couple de symboles orthogonal et d'un couple de symboles dupliqué.

L'allocation cyclique des couples de symboles courants, orthogonaux et dupliqués peut s'exprimer de façon équivalente par application d'un mot de code matriciel C sur la suite de symbole à transmettre S= {$s_0$,$s_1$,$s_2$,$s_3$,..$s_{2k}$, $s_{2k+1}$, ...} tel que :

$$C = \begin{pmatrix} s_0 & s_1 & s_2 & s_3 & -s_5^* & s_{4*} \\ s_0 & s_1 & -s_3^* & s_2^* & s_4 & s_5 \\ -s_1^* & s_0^* & s_2 & s_3 & s_4 & s_5 \end{pmatrix}$$

L'entité d'émission $EE_1$ émet la suite de symboles correspondant à la première ligne du mot de code, l'entité communicante $EE_2$ émet la suite de symboles correspondant à la deuxième ligne du code, et l'entité $EE_3$ émet la succession de symboles correspondant à la troisième ligne du code. Le couple orthogonal au couple [$s_0$,$s_1$] est dans cet exemple alloué à l'entité d'émission $EE_3$, le couple orthogonal au couple suivant [$s_2$,$s_3$] est alloué à l'entité d'émission $EE_2$, et le couple orthogonal au couple [$s_4$,$s_5$] est alloué à l'entité d'émission $EE_1$.

Les six colonnes du mot de code C correspondent respectivement aux six sous-porteuses des signaux OFDM émis par chaque entité d'émission. Ainsi, la première sous porteuse est modulée par le symbole $s_0$ pour l'entité d'émission $EE_1$, par le symbole $s_0$ pour l'entité d'émission $EE_2$ et par le symbole -$s_1^*$ par l'entité d'émission $EE_3$.

Le mot de code est ensuite répété pour tout cycle d'allocation de trois couples de symboles successifs.

En une étape E3-1, le signal OFDM global reçu, correspondant à l'émission des trois signaux OFDM comportant chacun six sous-porteuses et émis respectivement par les trois entités d'émission, est démodulé par un démodulateur OFDM par exemple par application d'une transformée de Fourier.

Des étapes E3-2 à E3-4 sont réitérées pour des groupes de trois couples de symboles successifs afin de restituer la suite de symboles du signal de données. Par soucis de clarté sur les indices, l'itération est décrite pour le premier groupe de trois couples.

En une étape E3-2, le démodulateur restitue un ensemble de six symboles reçus $r_j$, j=0,5 correspondant à l'émission de trois couples successifs par chacune des entités d'émission. De façon équivalente, les symboles reçus s'expriment sous forme matricielle par :

$$R = H\,C + N$$

avec

$$R = \begin{pmatrix} r_0 \\ r_1 \\ r_2 \\ r_3 \\ r_4 \\ r_5 \end{pmatrix} \qquad N = \begin{pmatrix} n_0 \\ n_1 \\ n_2 \\ n_3 \\ n_4 \\ n_5 \end{pmatrix}$$

et

$$H = \begin{pmatrix} H_1(f_1) & H_1(f_2) & H_1(f_3) & H_1(f_4) & H_1(f_5) & H_1(f_6) \\ \\ H_2(f_1) & H_2(f_2) & H_2(f_3) & H_2(f_4) & H_2(f_5) & H_2(f_6) \\ \\ H_3(f_1) & H_3(f_2) & H_3(f_3) & H_3(f_4) & H_3(f_5) & H_3(f_6) \end{pmatrix}$$

Les composantes du vecteur N représentent les composantes de bruit affectant les signaux reçus sur chaque sous-porteuse. Une composante $H_i(f_l)$ de la matrice H correspond au canal de propagation affectant le symbole véhiculé par la sous-porteuse $f_l$ du signal OFDM signal(i) émis par l'entité d'émission $EE_i$, l variant de 1 à 6 et i variant de i à 3.

Les propriétés d'orthogonalité et de co-linéarité obtenues entre les différents couples de symboles émis par les entités d'émission permettent d'exprimer les symboles reçus sous la forme équivalente suivante:

$$R = H_{equi} \times S_d + N$$

avec

$$H_{equi} = \begin{pmatrix} H_1(f_1)+H_2(f_1) & -H_3(f_1) & 0 & 0 & 0 & 0 \\ H_3*(f_2)) & [H_1(f_2)+H_2(f_2)]* & 0 & 0 & 0 & 0 \\ 0 & 0 & H_1(f_3)+H_3(f_3) & -H_2(f_3) & 0 & 0 \\ 0 & 0 & H_2*(f_4) & [H_1(f_4)+H_3(f_4)]* & 0 & 0 \\ 0 & 0 & 0 & 0 & H_2(f_5)+H_3(f_5) & -H_1(f_5) \\ 0 & 0 & 0 & 0 & H_1*(f_6) & [H_2(f_6)+H_3(f_6)]* \end{pmatrix}$$

et

$$S_d = \begin{pmatrix} s_0 \\ s_1* \\ s_2 \\ s_3* \\ s_4 \\ s_5* \end{pmatrix}$$

La matrice $H_{equi}$ étant une matrice orthogonale, une estimation des symboles ayant été émis est obtenue par décodage au sens du maximum de vraisemblance à partir de l'estimation de H.

Ainsi, en une étape E3-3, un estimateur de canal détermine la matrice H à partir du signal OFDM global reçu. L'estimation peut être par exemple effectuée par toute méthode d'estimation au sens du maximum de vraisemblance à partir de l'émission de pilotes par les entités d'émission ou bien encore par toute méthode d'estimation dite aveugle ne nécessitant pas de pilote.

En une étape E3-4, un estimateur de symboles détermine un vecteur $S_{estim}$ comportant les estimations des six symboles successifs $s_0, s_1, s_2, s_3, s_4, s_5$ ayant été transmis. Cette estimation est par exemple réalisée par multiplication du vecteur R reçu par la matrice $H_{equi}$ transposée conjuguée, notée $H_{equi}^\dagger$:

$$S_{estim} = H_{equi}^\dagger \times R$$

qui est également donnée par

$$S_{estim} = Id_6 \times DIV \times S + N,$$

la matrice $Id_6$ désignant la matrice identité de taille 6x6 et la matrice DIV donnée par:

$$DIV = \begin{pmatrix} ||H_1(f_1)+H_2(f_1)||^2+||H_3(f_1)||^2 \\ \\ ||H_1(f_2)+H_2(f_2)||^2+||H_3(f_2)||^2 \\ \\ ||H_1(f_3)+H_3(f_3)||^2+||H_2(f_3)||^2 \\ \\ ||H_1(f_4)+H_3(f_4)||^2+||H_2(f_4)||^2 \\ \\ ||H_2(f_5)+H_3(f_5)||^2+||H_1(f_5)||^2 \\ \\ ||H_2(f_6)+H_3(f_6)||^2+||H_1(f_6)||^2 \end{pmatrix}$$

Il est à noter que chaque ligne de la matrice DIV comporte un terme de gain en diversité temporelle obtenu par l'émission du couple courant et de sa réplique auquel s'ajoute un terme de gain en diversité spatiale obtenu par l'émission d'un couple orthogonal.

Pour un nombre NE d'entités d'émission, le démodulateur effectue une démodulation sur 2xNE sous-porteuses, et de façon équivalente les étapes E3-2 à E3-4 sont mises en oeuvre pour une matrice H de taille (NE, 2xNE).

Dans le cas d'allocation de plusieurs couples orthogonaux simultanément à plusieurs entités d'émission, une ligne de la matrice DIV comporte de la même façon un terme de gain en diversité temporelle donné par une première sommation correspondant à l'émission du couple courant et de sa réplique, auquel s'ajoute un terme de gain en diversité spatiale donné par une deuxième sommation correspondant à l'émission des couples orthogonaux.

Il est à noter que le mode de sélection de l'allocation des couples de symboles orthogonaux, courants et dupliqués aux entités d'émission, c'est-à-dire allocation cyclique ou sélective, est sans incidence sur le récepteur dont le seul paramètre à considérer est le nombre d'entités d'émission qui détermine le nombre de sous-porteuses des signaux OFDM.

Le récepteur est apte à recevoir une pluralité de signaux OFDM générés selon l'invention et émis indifféremment par des entités d'émission co-localisées ou distantes géographiquement. Le nombre de sous-porteuses est le double du nombre total d'entités d'émission co-localisées et distantes.

Afin d'augmenter le débit de transmission du signal de données, la suite de symboles peut d'autre part être au préalable divisée en un nombre M de sous-suites de symboles. Les sous-suites sont émises en parallèle par les entités d'émission selon l'invention. Chacun de ces NE signaux ODFM comporte un sous ensemble de 2XNE sous-porteuses qui lui sont propres parmi un ensemble de 2xNExM sous-porteuses.

Plusieurs modes de mise en oeuvre du procédé de transmission d'un signal de données comportant une suite de symboles à partir d'une pluralité d'entités d'émission indifféremment co-localisées et/ou distantes géographiquement sont décrits dans les paragraphes suivants.

Selon un premier mode, les entités d'émission sont aptes à déterminer, à partir d'une suite de symboles à transmettre considérés par couples successifs, un signal OFDM comportant un nombre de sous-porteuses égal au double du nombre d'entités d'émission. Dans ce mode, les moyens pour mettre en oeuvre l'invention sont intégrés dans les entités d'émission.

La **figure 5** représente une vue schématique d'un dispositif de transmission d'un signal OFDM d'une entité d'émission selon ce premier mode de mise en oeuvre.

Dans la figure 5 sont seulement représentés les moyens pour mettre en oeuvre l'invention. L'entité d'émission comporte :

- un moyen de génération ORTHO de couples de symboles orthogonaux à un couple de symboles à transmettre,
- un moyen de génération DUPLIC de couples de symboles dupliqués à partir d'un couple de symboles à transmettre,
- un moyen SELECT-EE de sélection cyclique d'un couple de symboles parmi les couples de symboles courants, orthogonaux et dupliqués. Le moyen SELECT-EE peut de façon équivalente être un moyen d'activation cyclique des moyens de génération ORTHO ou DUPLIC.
- un moyen d'émission EMET d'un signal OFDM, sur un nombre de sous-porteuses égal au double du nombre d'entités d'émission, à partir d'une succession de couples de symboles délivrés par le moyen SELECT-EE.

Selon un deuxième mode, les étapes du procédé sont mises en oeuvre par une entité de gestion du réseau de télécommunication et les entités d'émission connectées à l'entité de gestion. L'entité de gestion est par exemple un contrôleur de station de base d'un réseau de télécommunication radio mobile. Dans ce mode, une entité de gestion comporte les moyens de génération et allocation cyclique de couples de symboles courants, orthogonaux et dupliqués aux entités d'émission. Une entité d'émission comporte les moyens d'émission d'un signal OFDM à partir d'une succession de symboles reçus.

la **figure 6** représente une vue schématique d'un dispositif d'une entité de gestion de génération d'une pluralité d'une succession de couples de symboles et d'un dispositif de transmission d'un signal OFDM d'une entité d'émission connectée à l'entité de gestion, selon ce deuxième mode. Comme précédemment, le signal OFDM est déterminé à partir d'une suite de symboles à transmettre par une pluralité d'entités d'émission à destination d'un récepteur.

Dans la figure 6 sont seulement représentés les moyens dans l'entité de gestion et une entité d'émission pour mettre en oeuvre l'invention.

L'entité de gestion comporte :

- un moyen de génération ORTHO de couples de symboles orthogonaux à un couple de symbole à transmettre,
- un moyen de génération DUPLIC de couples de symboles dupliqués à partir d'un couple de symbole à transmettre,
- un moyen ALLOUE-C d'allocation cyclique à la pluralité d'entités d'émission des couples de symboles à transmettre (courants), des couples de symboles orthogonaux et dupliqués respectivement délivrés par les moyens de génération ORTHO et DUPLIC.

L'entité d'émission comporte :

- un moyen REC-EE de réception d'une succession de couples de symboles en provenance de l'entité de gestion,
- un moyen d'émission EMET d'un signal OFDM, sur un nombre de sous-porteuses égal au double du nombre d'entités d'émission à partir de la succession de couples symboles reçus par le moyen REC-EE.

Selon un troisième mode, les étapes du procédé sont mises en oeuvre par une entité de gestion du réseau de télécommunication et les entités d'émission connectées à l'entité de gestion. L'entité de gestion est par exemple un contrôleur de station de base d'un réseau de télécommunication radio mobile. Dans ce mode, une entité de gestion comporte les moyens de génération et allocation sélective de couples de symboles orthogonaux et dupliqués aux entités d'émission. Une entité d'émission comporte les moyens d'émission d'un signal OFDM à partir d'une succession de symboles reçus.

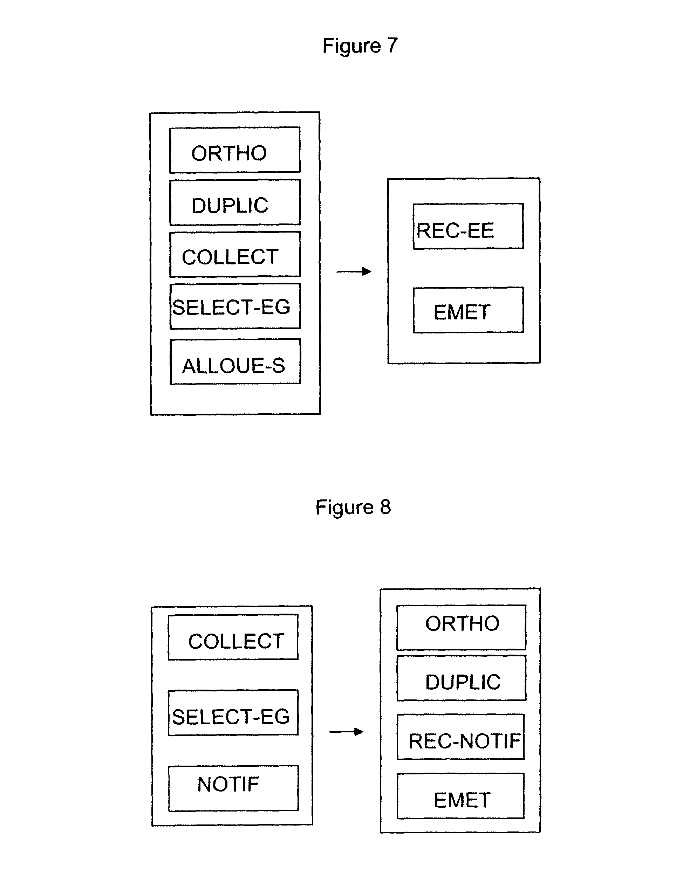

La **figure 7** représente une vue schématique d'un dispositif d'une entité de gestion de génération d'une pluralité d'une succession de couples de symboles et d'un dispositif de transmission d'un signal OFDM d'une entité d'émission connectée à l'entité de gestion selon ce troisième mode de réalisation.

Dans la figure 7 sont seulement représentés les moyens dans l'entité de gestion et une entité d'émission pour mettre en oeuvre l'invention. L'entité de gestion est par exemple un contrôleur de station de base d'un réseau de télécommunication radio mobile.

L'entité de gestion comporte :

- un moyen de génération ORTHO de couples de symboles orthogonaux à un couple de symbole à transmettre,
- un moyen de génération DUPLIC de couples de symboles dupliqués à partir d'un couple de symbole à transmettre,
- un moyen COLLECT de collecte d'un ensemble d'indices de qualité des canaux de propagation entre les entités d'émission et le récepteur,
- un moyen SELECT-EG de sélection de l'allocation des couples de symboles à transmettre (courants), des couples de symboles orthogonaux et dupliqués respectivement délivrés par les moyens de génération ORTHO et DUPLIC,
- un moyen ALLOUE-S d'allocation des couples de symboles à transmettre, orthogonaux et dupliqués sur les entités d'émission.

L'entité d'émission comporte :

- un moyen REC-EE de réception d'une succession de couples de symboles en provenance de l'entité de gestion,
- un moyen d'émission d'un signal OFDM, sur un nombre de sous-porteuses égal au double du nombre d'entités d'émission distantes, à partir de la succession de couples reçus par le moyen REC-EE.

Selon un quatrième mode, les étapes du procédé sont mises en oeuvre par une entité de gestion du réseau de télécommunication et les entités d'émission connectées à l'entité de gestion. L'entité de gestion est par exemple un contrôleur de station de base d'un réseau de télécommunication radio mobile. Dans ce mode, une entité de gestion comporte les moyens de notification d'une allocation sélective de couples de symboles à transmettre, orthogonaux et dupliqués, la sélection étant déterminée à partir d'une collecte d'indices de qualité de canaux de propagation entre les entités d'émission et le récepteur. Une entité d'émission comporte les moyens de génération d'une succession de couples à transmettre, de couples dupliqués et orthogonaux selon une notification de sélection reçue, et d'émission d'un signal OFDM.

La **figure 8** représente une vue schématique d'un dispositif d'une entité de gestion de sélection d'une allocation d'au moins un couple de symbole à transmettre, un couple de symboles orthogonal et un couple de symboles dupliqué et d'un dispositif de transmission d'un signal OFDM d'une entité d'émission connectée à l'entité de gestion selon ce quatrième mode.

Dans la figure 8 sont seulement représentés les moyens dans l'entité de gestion et une entité d'émission pour mettre en oeuvre l'invention. L'entité de gestion est par exemple un contrôleur de station de base d'un réseau de télécommunication radio mobile.

L'entité de gestion comporte :

- un moyen de collecte (COLLECT) d'un ensemble d'indices de qualité des canaux de propagation entre la pluralité d'entités d'émission et le récepteur,
- un moyen (SELECT-EG) de sélection d'une allocation d'au moins un couple de symboles à transmettre et d'au moins un couple de symboles orthogonal et un couple de symboles dupliqué à partir du couple de symboles à transmettre,
- un moyen (NOTIF) de notification de la sélection à la pluralité d'entités d'émission.

L'entité d'émission comporte :

- un moyen de génération (ORTHO) d'au moins un couple de symboles orthogonaux à un couple de symboles à transmettre,
- un moyen de génération (DUPLIC) d'au moins un couple de symboles dupliqués à partir d'un couple de symbole à transmettre,
- un moyen de réception (REC-NOTIF) d'une notification d'une sélection des couples de symboles à transmettre, orthogonaux ou dupliqués émise par l'entité de gestion
- un moyen d'émission (EMET) d'un signal OFDM, sur un nombre de sous-porteuses égal au double du nombre des entités d'émission, à partir d'une succession des couples sélectionnés selon la notification reçue par le moyen de réception REC-NOTIF.

L'invention décrite concerne également des dispositifs pour la transmission d'un signal de données comportant une suite de symboles. En conséquence, l'invention s'applique également à des programmes d'ordinateur notamment des programmes d'ordinateur sur ou dans un support d'enregistrement d'informations, adaptés à mettre en oeuvre l'invention. Ces programmes peuvent utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter les étapes du procédé selon l'invention.

**Revendications**

1. Procédé de transmission de données constituées d'une suite (S) de symboles, dits courants, à destination d'un récepteur, ledit procédé comportant la génération de NE signaux OFDM à $N_f$ sous-porteuses émis respectivement par NE entités d'émission ($EE_i$), NE>1, $N_f$=2xNE, **caractérisé en ce qu'**il comporte les étapes de :

   - génération de NE successions de $N_f/2$ couples de symboles à partir de $N_f$ symboles courants, comportant les sous-étapes de:

      - collecte d'un ensemble d'indices de qualité de canaux de propagation entre les NE entités d'émission et le récepteur,
      - génération (E2-1) de $N_{ortho} \geq 1$ couples de symboles orthogonal ([$y_{2k}$, $y_{2k+1}$]) à un couple courant ([$s_{2k}$, $s_{2k+1}$]) de symboles,
      - génération (E2-2) de $N_{duplic} \geq 1$ répliques par duplication dudit couple courant de symboles

   - le nombre total de couples de symboles générés lors des étapes de génération étant tel que $N_{ortho}+N_{duplic} + 1 = NE$,

      - allocation (E2-3) dudit couple courant de symboles, des $N_{ortho}$ couples de symboles orthogonal et des $N_{duplic}$ répliques aux NE entités d'émission,
      - sélection de l'allocation d'un couple de symboles orthogonal à un ensemble d'entités d'émission dont les valeurs des indices de qualité correspondantes de l'ensemble des indices de qualité collecté sont maximum ou minimum,

   lesdites sous-étapes étant itérées pour les $N_f/2$ couples de symboles,

      - génération (E2-4) des NE signaux OFDM à partir respectivement des NE successions de $N_f/2$ couples de symboles tel que pour une succession de $N_f/2$ couples de symboles les $N_f$ symboles successifs modulent respectivement les $N_f$ sous porteuses.

2. Procédé de transmission selon la revendication 1 dans lequel ledit au moins un couple de symboles orthogonal est généré par un codage spatio-temporel appliqué au couple courant de symboles.

3. Entité de gestion pour transmettre un signal de données comportant une suite (S) de symboles à destination d'un récepteur, ladite suite de symboles étant destinée à être transmise sous la forme d'une pluralité de signaux OFDM à $N_f$ sous-porteuses émis respectivement par NE entités d'émission ($EE_i$) connectées à ladite entité de gestion (EG), NE>1, $N_f$ = 2 x NE, 35 **caractérisé en ce que** l'entité comporte:

   - un moyen de collecte (COLLECT) d'un ensemble d'indices de qualité de canaux de propagation entre les NE entités d'émission et ledit récepteur,
   - un moyen (SELECT-EG) d'allocation aux NE entités d'émission d'un couple de symboles à transmettre, de $N_{ortho}$ couples de symboles orthogonaux au couple de symboles à transmettre et de $N_{duplic}$ répliques du couple de symboles à transmettre, avec $N_{ortho} + N_{dup} + 1 = NE$, et de sélection de l'allocation d'un couple de symboles orthogonal à un ensemble parmi les NE entités d'émission dont les valeurs des indices de qualité correspondantes de l'ensemble des indices de qualité collecté sont maximum ou minimum,
   - un moyen (NOTIF) de notification de ladite sélection aux NE entités d'émission.

4. Système comprenant NE entités ($EE_i$) d'émission et une entité de gestion selon la revendication 3 connectée aux NE entités d'émission pour transmettre un signal de données comportant une suite (S) de symboles à destination d'un récepteur, ladite suite de symboles étant destinée à être transmise sous la forme d'une pluralité de signaux OFDM à $N_f$ sous-porteuses émis respectivement par les NE entités d'émission, NE>1, $N_f$ = 2 x NE, une entité d'émission comportant:

   - un moyen de génération (ORTHO) d'au moins un couple de symboles orthogonal à un couple de symboles à transmettre,

- un moyen de génération (DUPLIC) d'au moins un couple de symboles dupliqué à partir d'un couple de symbole à transmettre,

- un moyen de réception (REC-NOTIF) d'une notification d'une sélection desdits couples de symboles à transmettre, orthogonaux ou dupliqués,

- un moyen d'émission (EMET) d'un signal OFDM à $N_f$ sous-porteuses, formé à partir d'une succession desdits couples de symboles alloués et sélectionnés, tel que pour une succession de $N_f/2$ couples de symboles les $N_f$ symboles successifs modulent respectivement les $N_f$ sous porteuses.

**5.** Programme d'ordinateur pour une entité de gestion comprenant des instructions logicielles pour commander la mise en oeuvre de celles des étapes du procédé selon l'un quelconque des revendications 1 à 2 qui sont mises en oeuvre par une entité de gestion lorsque le programme est exécuté par l'entité de gestion.

**Patentansprüche**

**1.** Verfahren zur Übertragung von Daten, die von einer Folge (S) von so genannten laufenden Symbolen in Richtung eines Empfängers gebildet sind, wobei das Verfahren die Erzeugung von NE Signalen OFDM auf $N_f$ Unterträgerfrequenzen, die jeweils von NE Sendeeinheiten ($EE_i$) entsandt werden, umfasst, wobei NE>1, $N_f=2xNE$, **dadurch gekennzeichnet, dass** es die folgenden Schritte umfasst:

- Erzeugung von NE Aufeinanderfolgen von $N_f/2$ Symbolpaaren aus $N_f$ laufenden Symbolen, umfassend die folgenden Unterschritte:

  * Sammeln einer Gesamtheit von Qualitätsindizes von Ausbreitungskanälen zwischen den NE Sendeeinheiten und dem Empfänger,
  * Erzeugung (E2-1) von $N_{ortho}\geq1$ Paaren von orthogonalen Symbolen ($[y_{2k}, y_{2k+1}]$) auf einem laufenden Paar ($[s_{2k}, s_{2k+1}]$) von Symbolen,
  * Erzeugung (E2-2) von $N_{duplic}\geq1$ Repliken durch Duplikation des laufenden Symbolpaars,

- wobei die Gesamtzahl von in den Erzeugungsschritten erzeugten Symbolpaaren derart ist, dass $N_{ortho}+N_{duplic}+1=NE$,

- Zuteilung (E2-3) des laufenden Symbolpaars, der $N_{ortho}$ Paare von orthogonalen Symbolen und der $N_{duplic}$ Repliken an die NE Sendeeinheiten,

- Auswahl der Zuteilung eines Paars von orthogonalen Symbolen einer Gesamtheit von Sendeeinheiten, deren Werte der entsprechenden Qualitätsindizes der Gesamtheit der gesammelten Qualitätsindizes maximal oder minimal sind,

wobei die Unterschritte für die $N_f/2$ Symbolpaare iteriert werden,

- Erzeugung (E2-4) der NE Signale OFDM aus jeweils den NE Aufeinanderfolgen von $N_f/2$ Symbolpaaren, so dass für eine Aufeinanderfolge von $N_f/2$ Symbolpaaren die $N_f$ aufeinanderfolgenden Symbole jeweils die $N_f$ Unterträgerfrequenzen modulieren.

**2.** Übertragungsverfahren nach Anspruch 1, bei dem das mindestens eine Paar von orthogonalen Symbolen durch eine Raum-Zeit-Codierung erzeugt wird, die an das laufende Symbolpaar angelegt wird.

**3.** Steuereinheit, um ein Datensignal, umfassend eine Folge (S) von Symbolen in Richtung eines Empfängers, zu übertragen, wobei die Folge von Symbolen dazu bestimmt ist, in Form einer Vielzahl von Signalen OFDM auf $N_f$ Unterträgerfrequenzen, die jeweils von NE Sendeeinheiten ($EE_i$) entsandt werden, die an die Steuereinheit (EG) angeschlossen sind, übertragen zu werden, wobei NE>1, $N_f=2xNE$, **dadurch gekennzeichnet, dass** die Einheit umfasst:

- ein Mittel zum Sammeln (COLLECT) einer Gesamtheit von Qualitätsindizes von Ausbreitungskanälen zwischen den NE Sendeeinheiten und dem Empfänger,

- ein Mittel zur Zuteilung (SELECT-EG) eines zu übertragenden Symbolpaars, der $N_{ortho}$ Paare von orthogonalen Symbolen zu dem zu übertragenden Symbolpaar und der $N_{duplic}$ Repliken des zu übertragenden Symbolpaars an die NE Sendeeinheiten, wobei $N_{ortho}+N_{dup}+1=NE$, und zur Auswahl der Zuteilung eines Paars von orthogonalen Symbolen einer Gesamtheit unter den NE Sendeeinheiten, deren Werte der entsprechenden Qualitätsindizes der Gesamtheit der gesammelten Qualitätsindizes maximal oder minimal sind,

- ein Mittel (NOTIF) zur Mitteilung der Auswahl an die NE Sendeeinheiten.

**4.** System, umfassend NE Sendeeinheiten ($EE_i$) und eine Steuereinheit nach Anspruch 3, die an die NE Sendeeinheiten angeschlossen ist, um ein Datensignal, umfassend eine Folge (S) von Symbolen in Richtung eines Empfängers, zu übertragen, wobei die Folge von Symbolen dazu bestimmt ist, in Form einer Vielzahl von Signalen OFDM auf $N_f$ Unterträgerfrequenzen, die jeweils von NE Sendeeinheiten entsandt werden, übertragen zu werden, wobei NE>1, $N_f$=2xNE, eine Sendeeinheit umfasst:

- ein Mittel zur Erzeugung (ORTHO) mindestens eines Paars von orthogonalen Symbolen zu einem zu übertragenden Symbolpaar,
- ein Mittel zur Erzeugung (DUPLIC) mindestens eines duplizierten Symbolpaars aus einem zu übertragenden Symbolpaar,
- ein Mittel für den Empfang (REC-NOTIF) einer Mitteilung einer Auswahl der zu übertragenden orthogonalen oder duplizierten Symbolpaare,
- ein Mittel zum Senden (EMET) eines Signals OFDM auf $N_f$ Unterträgerfrequenzen, das von einer Aufeinanderfolge der zugeteilten und ausgewählten Symbolpaare gebildet ist, so dass für eine Aufeinanderfolge von $N_f$/2 Symbolpaaren die $N_f$ aufeinanderfolgenden Symbole jeweils die $N_f$ Unterträgerfrequenzen modulieren.

**5.** Computerprogramm für eine Steuereinheit, umfassend Softwarebefehle zur Steuerung des Einsatzes jener Schritte des Verfahrens nach einem der Ansprüche 1 bis 2, die von einer Steuereinheit eingesetzt werden, wenn das Programm von der Steuereinheit ausgeführt wird.

**Claims**

**1.** Method for transmitting data constituted by a series (S) of symbols, which are referred to as current, to a receiver, said method involving the generation of NE OFDM signals with $N_f$ subcarriers that are respectively transmitted by NE transmission entities ($EE_i$), NE>1, $N_f$=2xNE, **characterized in that** it comprises the steps of:

- generation of NE successions of $N_f$/2 symbol couples from $N_f$ current symbols, comprising the substeps of:

- collection of a set of quality indices for propagation channels between the NE transmission entities and the receiver,
- generation (E2-1) of $N_{ortho} \geq 1$ orthogonal symbol couples ($[y_{2k}, y_{2k+1}]$) for a current symbol couple ($[s_{2k}, s_{k2+1}]$),
- generation (E2-2) of $N_{duplic} \geq 1$ replicas by means of duplication of said current symbol couple,

- the total number of symbol couples generated in the generation steps being such that $N_{ortho} + N_{duplic} + 1 = NE$,

- allocation (E2-3) of said current symbol couple, of the $N_{ortho}$ orthogonal symbol couples and of the $N_{duplic}$ replicas to the NE transmission entities,
- selection of the allocation of an orthogonal symbol couple to a set of transmission entities for which those values of the quality indices from the collected set of quality indices are at a maximum or at a minimum,

said substeps being iterated for the $N_f$/2 symbol couples,

- generation (E2-4) of the NE OFDM signals from the respective NE successions of $N_f$/2 symbol couples such that for a succession of $N_f$/2 symbol couples the $N_f$ successive symbols modulate the respective $N_f$ subcarriers.

**2.** Transmission method according to Claim 1, in which said at least one orthogonal symbol couple is generated by means of spatial-temporal coding applied to the current symbol couple.

**3.** Management entity for transmitting a data signal comprising a series (S) of symbols to a receiver, said series of symbols being intended to be transmitted in the form of a plurality of OFDM signals with $N_f$ subcarriers that are respectively transmitted by NE transmission entities ($EE_i$) that are connected to said management entity (EG), NE>1, $N_f$ = 2 x NE, **characterized in that** the entity comprises:

- a collection means (COLLECT) for collecting a set of quality indices for propagation channels between the NE transmission entities and said receiver,

- a means (SELECT-EG) for allocating to the NE transmission entities a symbol couple for transmission, $N_{ortho}$ orthogonal symbol couples for the symbol couple for transmission and $N_{duplic}$ replicas of the symbol couple for transmission, where $N_{ortho} + N_{dup} + 1 = NE$,

and for selecting the allocation of an orthogonal symbol couple to a set among the NE transmission entities for which those values of the quality indices from the collected set of quality indices are at a maximum or at a minimum,

- a means (NOTIF) for notifying the NE transmission entities of said selection.

4. System comprising NE transmission entities ($EE_i$) and a management entity according to Claim 3 that is connected to the NE transmission entities in order to transmit a data signal comprising a series (S) of symbols to a receiver, said series of symbols being intended to be transmitted in the form of a plurality of OFDM signals with $N_f$ subcarriers that are respectively transmitted by the NE transmission entities, $NE > 1$, $N_f = 2 \times NE$, a transmission entity comprising:

- a generating means (ORTHO) for generating at least one orthogonal symbol couple for a symbol couple for transmission,
- a generating means (DUPLIC) for generating at least one duplicated symbol couple from a symbol couple for transmission,
- a reception means (REC-NOTIF) for receiving notification of selection of said orthogonal or duplicated symbol couples for transmission,
- a transmission means (EMET) for transmitting an OFDM signal with $N_f$ subcarriers, which is formed from a succession of said allocated and selected symbol couples, such that for a succession of $N_f/2$ symbol couples the $N_f$ successive symbols modulate the respective $N_f$ subcarriers.

5. Computer program for a management entity comprising software instructions for controlling the implementation of those steps of the method according to any one of Claims 1 to 2 that are implemented by a management entity when the program is executed by the management entity.

Figure 1

## Figure 2

E2-1    $[y_{2k}, y_{2k+1}]$

E2-2    $[s_{2k}, s_{2k+1}]$

E2-3    $EE_1$   $EE_i$   $EE_{NE}$

E2-4    signal(i), i=1,NE

INIT   k=0

ITE   k=k+1

## Figure 3

E2-31    $IND_i$, i=1,NE

E2-32    IND   $EE_1$   $EE_i$   $EE_{NE}$

Figure 4

| | |
|---|---|
| E3-1 | demod |
| E3-2 | $r_j$ |
| E3-3 | H |
| E3-4 | $H_{equi}{}^\dagger \times R$ |

Figure 5

ORTHO

DUPLIC

SELECT-EE

EMET

Figure 6

ORTHO

DUPLIC

ALLOUE-C

REC-EE

EMET

Figure 7

```
┌─────────────────────┐
│  ┌───────────────┐  │
│  │     ORTHO     │  │
│  └───────────────┘  │
│  ┌───────────────┐  │              ┌─────────────────────┐
│  │     DUPLIC    │  │              │  ┌───────────────┐  │
│  └───────────────┘  │              │  │    REC-EE     │  │
│  ┌───────────────┐  │              │  └───────────────┘  │
│  │    COLLECT    │  │    ────→     │                     │
│  └───────────────┘  │              │  ┌───────────────┐  │
│  ┌───────────────┐  │              │  │     EMET      │  │
│  │   SELECT-EG   │  │              │  └───────────────┘  │
│  └───────────────┘  │              └─────────────────────┘
│  ┌───────────────┐  │
│  │   ALLOUE-S    │  │
│  └───────────────┘  │
└─────────────────────┘
```

Figure 8

```
┌─────────────────────┐              ┌─────────────────────┐
│  ┌───────────────┐  │              │  ┌───────────────┐  │
│  │    COLLECT    │  │              │  │     ORTHO     │  │
│  └───────────────┘  │              │  └───────────────┘  │
│                     │              │  ┌───────────────┐  │
│  ┌───────────────┐  │              │  │     DUPLIC    │  │
│  │   SELECT-EG   │  │    ────→     │  └───────────────┘  │
│  └───────────────┘  │              │  ┌───────────────┐  │
│                     │              │  │   REC-NOTIF   │  │
│  ┌───────────────┐  │              │  └───────────────┘  │
│  │     NOTIF     │  │              │  ┌───────────────┐  │
│  └───────────────┘  │              │  │     EMET      │  │
└─────────────────────┘              │  └───────────────┘  │
                                     └─────────────────────┘
```

## RÉFÉRENCES CITÉES DANS LA DESCRIPTION

**Documents brevets cités dans la description**

- US 2005265280 A

**Littérature non-brevet citée dans la description**

- **SM ALAMOUTI.** A simple transmit diversity technique for wireless communications. *IEEE Journal on Select Areas in Communications,* 1998, vol. 16

- **YOUNG C. YOON ; ALPASLAN SAVAS ; WANSHI CHEN.** System Performance of Distributed Transmit Diversity of OFDL-based 1xEV-DO Broadcast Network. *Wireless Communications and Networking Conférence,* 2006, vol. 3, 1475-1479